# EUROPEAN PATENT APPLICATION

(11) **EP 4 446 540 A1**
(43) Date of publication of application: **16.10.2024**
(21) Application number: 23866667.1
(22) Date of filing: 05.12.2023
(51) Int. Cl.: E05D 7/00, E05D 5/10, E05D 11/00, E05D 11/10

(54) **GAPLESS HINGE MECHANISM**

(30) Priority: 30.01.2023 CN 202310044986
(71) Applicant: Mingyang Technology (Suzhou) Co., Ltd., Suzhou, Jiangsu 215200 (CN)
(72) Inventor: WANG, Mingxiang, Suzhou, Jiangsu 215200 (CN); ZHENG, Hongzhang, Suzhou, Jiangsu 215200 (CN)
(74) Representative: karo IP
(86) International application number: PCT/CN2023/136515
(87) International publication number: WO 2024/159913

(57) **Abstract**

The present disclosure relates to a gapless hinge mechanism including an external gear plate, an internal gear assembly, a gap elimination unit, a cover plate, a driving wheel, and an axial limiting member. The external gear plate may be crimpedly connected to the internal gear assembly. A first internal hole may be disposed at a center of the external gear plate, and a central boss may be disposed at an opening of the first internal hole. A space A may be defined by the center boss and a central internal hole of the internal gear assembly. A gap elimination unit may be disposed in the space A. The present disclosure provides a miniaturized gapless hinge mechanism which not only provides a rotation function, but also eliminates loose gap in the rotation direction, solves the problem of loose feeling of the mechanism, and avoids problems such as noise due to vibration. Compared with a planetary gear transmission reduction mechanism with a small tooth error commonly used in real life, the device of the present disclosure has the characteristics such as more ingenious structure, small overall volume, and small eccentricity, etc.

## Description

This present disclosure claims priority to Chinese patent application No. 202310044986.1, filed on January 30, 2023, entitled "GAPLESS HINGE MECHANISM", which is incorporated herein by reference in its entirety.

### TECHNICAL FIELD

The present disclosure relates to the technical field of hinge mechanism, and in particular, to a gapless hinge mechanism.

### BACKGROUND

The hinge mechanism is often used in the automotive industry and the home furnishing industry. Some hinges may not only provide rotation but also stop and lock at any position according to actual needs. Due to the manufacturing precision problem, gaps in a rotational direction of these hinges may be not completely eliminated, these hinges often appear loose, and currently generally use a planetary gear transmission reduction mechanism with a small tooth error, which has problems such as large eccentricity, strong sense of rubbing during rotation, etc. In an aspect of the gap elimination, problems such as abnormal noise and looseness may occur during the adjustment process due to wear and tear of parts and manufacturing problems, which seriously affects comfort. In view of the above problems, the present disclosure aims to provide a simple and functionally reliable hinge mechanism to solve the above problems.

### SUMMARY

The descriptions herein merely provide background information related to embodiments of the present disclosure and do not necessarily constitute the prior art.

An embodiment of the present disclosure provides a gapless hinge mechanism to solve the problems of the current hinge mechanism such as large eccentricity and strong sense of rubbing during rotation.

According to various embodiments of the present disclosure, a gapless hinge mechanism is provided. The gapless hinge mechanism may include an external gear plate, an internal gear assembly, a gap elimination unit, a cover plate, a driving wheel, and an axial limiting member. The external gear plate may be crimpedly connected to the internal gear assembly. A first internal hole may be disposed at a center of the external gear plate, and a center boss may be disposed at an opening of the first internal hole. A space A may be defined by the center boss and a central internal hole of the internal gear assembly. A gap elimination unit may be disposed in the space A.

Further, an external gear belt may be disposed at an outer side of the external gear plate. The internal gear assembly may include an internal gear plate and a shaft sleeve. The shaft sleeve may be disposed in a central internal hole of the internal gear plate, and the internal gear plate may be engaged with the external gear belt.

Further, the gap elimination unit may include a driving ring, a first wedge block, a second wedge block, and a spring. A second internal hole may be disposed in the driving ring. The gap elimination unit may be rotationally sleeved on the center boss of the external gear plate through the second internal hole. The first wedge block and the second wedge block may be both disposed at an outer side of the driving ring. Both ends of the spring may act on the first wedge block and the second wedge block.

Further, the driving ring may be provided with a first surface, a second surface, and a third surface. The first wedge block may be provided with a first block surface, a second block surface, a third block surface, and a fourth block surface. The second wedge block may be provided with a fifth block surface, a sixth block surface, a seventh block surface, and an eighth block surface. The third surface may be connected against the third block surface and the seventh block surface, respectively. The fourth block surface and the eighth block surface may be connected against an internal hole of the shaft sleeve of the internal gear assembly. The first surface may be connected against the first block surface.

Further, the driving ring may be provided with a first snap-fit feature, and one side of the driving wheel may be provided with a second snap-fit feature, a first boss, and a second boss. The first snap-fit feature and the second snap-fit feature may be snap-fitted with each other.

Further, the axial limiting member may be snap-fitted with the driving wheel in an axial direction. The cover plate may be disposed on the internal gear assembly.

Further, the spring may be a cylindrical spring.

Further, the axial limiting member may be a circlip.

An embodiment of the present disclosure provides a gapless hinge mechanism, which brings the following beneficial effects: by providing a miniaturized hinge mechanism by the embodiments of the present disclosure, it not only provides a rotation function, but also eliminates a loose gap in a rotation direction, solves the problem of loose feeling of the mechanism, and avoids problems such as noise due to vibration. Compared with the planetary gear transmission reduction mechanism with a small tooth error commonly used in real life, the device of the present disclosure has the characteristics such as more ingenious structure, small overall volume, and small eccentricity.

The details of one or more embodiments of the present disclosure are set forth in the accompanying drawings and the description below. Other features, objects, and advantages of the disclosed embodiments will become apparent from the description, drawings, and claims.

### BRIEF DESCRIPTION OF DRAWINGS

To better describe and illustrate those embodiments or examples of the present disclosure disclosed herein, one or more of the accompanying drawings can be referred to. The additional details or examples used to describe the drawings should not be regarded as the limitation to the scope of any of the disclosed present disclosure, the embodiments or examples currently described, or the best mode of the present disclosure currently understood.
FIG. 1 is a schematic diagram illustrating a front perspective exploded view of a gapless hinge assembly according to an embodiment of the present disclosure;
FIG. 2 is a schematic diagram illustrating a side perspective exploded view of a gapless hinge assembly according to an embodiment of the present disclosure;
FIG. 3 is a schematic diagram illustrating a cross-sectional structural view of a gapless hinge assembly after assembling according to an embodiment of the present disclosure;
FIG. 4 is a schematic diagram illustrating a front structural view of a gapless hinge assembly after assembling according to an embodiment of the present disclosure; and
FIG. 5 is an overall three-dimensional schematic diagram according to an embodiment of the present disclosure.

Explanation of the reference numerals:
1-external gear plate, 11-external gear belt, 12-center boss, 13-first internal hole, 2-internal gear assembly, 21-internal gear plate, 21a-internal gear belt, 22-shaft sleeve, 3-gap elimination unit, 31-driving ring, 31a-first surface, 31b-second surface, 31c-third surface, 311-first snap-fit feature, 312-second internal hole, 32-first wedge block, 32a-first block surface, 32b-second block surface, 32c-third block surface, 32d-fourth block surface, 33-second wedge block, 33a-fifth block surface, 33b-sixth block surface, 33c-seventh block surface, 33d-eighth block surface, 34-spring, 4-cover plate, 5-driving wheel, 51-second snap-fit feature, 52-first boss of the driving wheel, 53-second boss of the driving wheel, 6-axial limiting member.

### DETAILED DESCRIPTION

In order to make the purpose, technical solution, and advantages of the embodiments of the present disclosure more clear, the embodiments of the present disclosure are further described in detail below combing with the accompanying drawings and examples. It should be understood that the specific embodiments described here are only used to explain the present disclosure and are not intended to limit the present disclosure.

It should be noted that when an element is described as being "disposed on" another element, it can be directly on another element or an intervening element may exist. When an element is regarded as being "connected" to another element, it can be directly connected to another element or an intervening element may exist. The terms "vertical", "horizontal", "left", "right" and similar expressions used herein are for only illustrative purposes and do not represent the only one implementation.

As used herein, the orientation or positional relationship indicated by the terms "center", "longitudinal", "lateral", "length", "width", "thickness", "height", "upper", "lower", "front", "back", "left", "right", "vertical", "horizontal", "top", "bottom", "external", "internal", "clockwise", and "counterclockwise", etc. is an orientation or positional relationship shown in the drawings, which are only to facilitate simplifying the description of the embodiments of the present disclosure, and do not indicate that the device or element referred to must have a specific orientation, be constructed and operated in a specific orientation, that is, they cannot be understood as a limitation on the present disclosure.

The terms "first" and "second" used herein are only for the purpose of clear description and cannot be understood as the relative importance of the indicated features or the number of the indicated technical features. Therefore, features defined by "first" or "second" may expressly include at least one of the features. In the description of the embodiments of the present disclosure, "a plurality of " means at least two, such as two, three, etc., "several" means at least one, such as one, two, three, etc., and unless explicitly limited otherwise.

The terms "mount", "connect with", "connect to", "fix", and "dispose", etc. used in the present disclosure should be understood in a general manner. For example, "connection" can be "fixed connection", "detachable connection", or "integrated connection", it can also be a mechanical connection or an electrical connection, it can also be a direct connection, an indirect connection via an intermediate medium, internal communication of two elements or interactive relationship of two elements. For those skilled in the art, the specific meaning of the above terms in the embodiments of the present disclosure can be understood according to specific conditions.

Unless expressly limited otherwise, a first feature is "on", "upon", "above", "over", "below", "under", "beneath", or "underneath" a second feature means the first feature may directly contact the second feature or the first feature may indirectly contact the second feature via an intermediate medium. Furthermore, the first feature is "on", "above", "over" the second feature means the first feature may be directly above or diagonally above the second feature, or merely means a horizontal height of the first feature is higher than that of the second feature. The first feature "below", "under", "underneath" the second feature means that the first feature may be directly under or diagonally under the second feature, or merely means that the horizontal height of the first feature is less than that of the second feature.

Unless expressly defined otherwise, all technical and scientific terms used in the present disclosure have the same meaning as commonly understood by those skilled in the art to which the embodiments of the present disclosure belong. The terms used in the embodiments in the description of the present disclosure are for the purpose of describing specific embodiments only and are not intended to limit the disclosed embodiments. Various technical features of the embodiments can be combined in any way. To simplify the description, not all possible combinations of various technical features in the embodiments are described. However, as long as there is no conflict in the combination of these technical features, all possible combinations should be considered to be within the scope of the present disclosure.

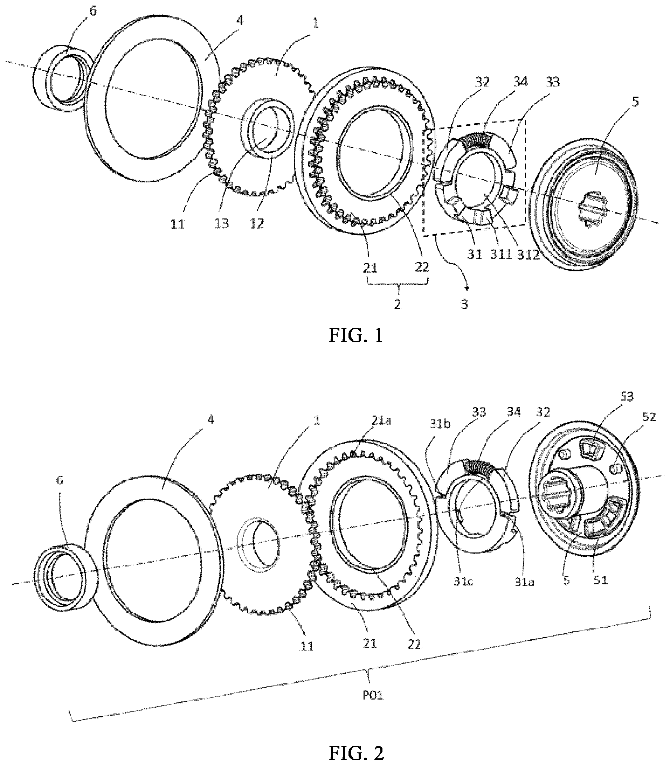

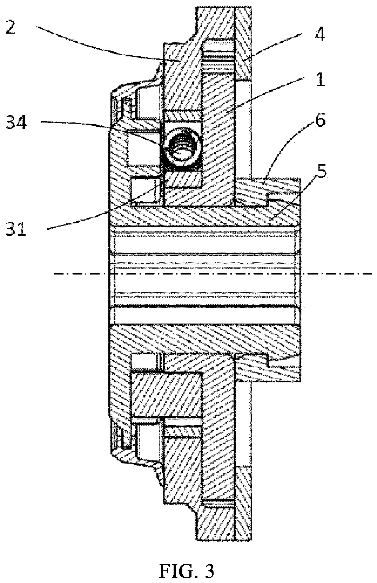

In one implementation, as shown in FIGs. 1 to 5, in this implementation, a fixed bracket P02 may be included, which may be provided with a seat leg support frame P03 and a driving motor P05. A connecting rod P04 may be disposed on the seat leg support frame P03, and the driving motor P05 may be hingedly connected to the connecting rod P04. A gapless hinge assembly P01 may be disposed on the fixed bracket P02, which includes a gap elimination unit 3, a driving wheel 5, an external gear plate 1 disposed on the fixed bracket P02, and an internal gear assembly 2 disposed on the seat leg support frame P03. The external gear plate 1 is crimpedly connected to the internal gear assembly 2. A first internal hole 13 is disposed at a center of the external gear plate 1, and a center boss 12 is disposed at an opening of the first internal hole 13. A space A is defined by the center boss 12 and a central internal hole of the internal gear assembly 2, and a gap elimination unit 3 is disposed in the space A.

The external gear plate 1 of the gapless hinge mechanism P01 may be fixedly coupled to the fixed bracket P02, and the internal gear assembly 2 may be fixedly coupled to the seat leg support frame P03. The connecting rod P04 may respectively pass through center spline holes on both sides of the driving wheel 5 of the hinge mechanism, and the driving motor P05 may be hinged to the connecting rod P04. By controlling the driving motor, an angle adjustment function of the seat leg support mechanism can be realized.

As shown in FIGs. 1 to 3, in some embodiments, an external gear belt 11 may be disposed at an outer side of the external gear plate 1. The internal gear assembly 2 may include an internal gear plate 21 and a shaft sleeve 22. The shaft sleeve 22 may be disposed in a central internal hole of the internal gear plate 21. The internal gear plate 21 may be engaged with the external gear belt 11.

The external gear belt 11 disposed on the external gear plate 1 may be engaged with an internal gear belt 21a disposed on the internal gear plate 21, thereby generating an eccentricity e between centers of the external gear plate 1 and the internal gear plate 21.

As shown in FIGs. 1 and 2, in some embodiments, the gap elimination unit 3 may include a driving ring 31, a first wedge block 32, a second wedge block 33, and a spring 34. A second internal hole 312 may be disposed in the driving ring 31. The gap elimination unit 3 may be rotationally sleeved on the center boss 12 of the external gear plate 1 through the second internal hole 312. The first wedge block 32 and the second wedge block 33 may be disposed at an outer side of the driving ring 31. Both ends of the spring 34 may act on the first wedge block 32 and the second wedge block 33, respectively.

The first wedge block 32 and the second wedge block 33 may be wedged to both sides thereof respectively under the simultaneous action of the spring force of the spring 34 to ensure the stability of the eccentricity e after the external gear plate 1 and the internal gear plate 21 are engaged, thereby eliminating a gap of the hinge mechanism in a rotation direction.

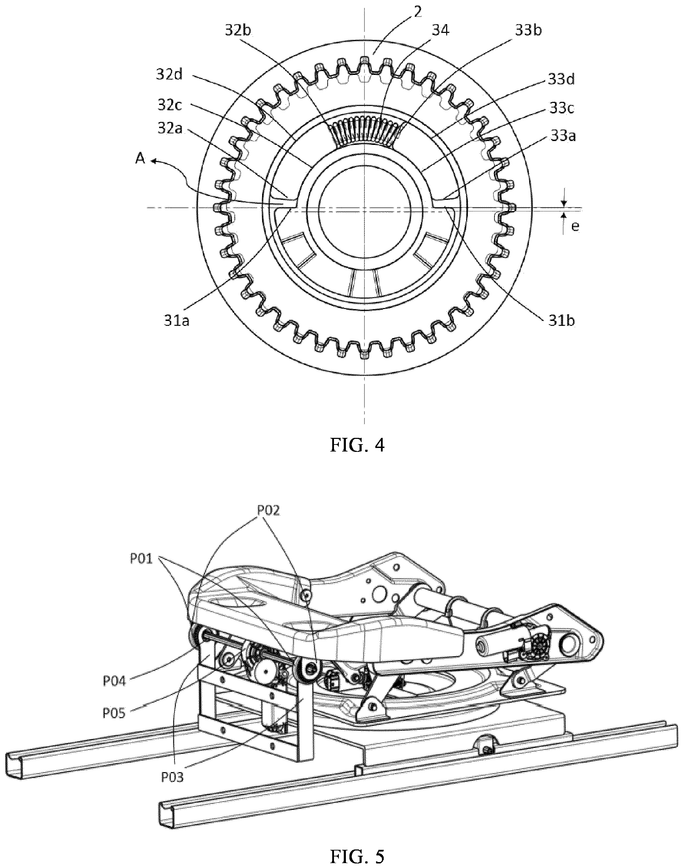

As shown in FIG. 4, in some embodiments, the driving ring 31 may be provided with a first surface 31a, a second surface 31b, and a third surface 31c. The first wedge block 32 may be provided with a first block surface 32a, a second block surface 32b, a third block surface 32c, and a fourth block surface 32d. The second wedge block 33 may be provided with a fifth block surface 33a, a sixth block surface 33b, a seventh block surface 33c, and an eighth block surface 33d. The third surface 31c may be connected against the third block surface 32c and the seventh block surface 33c, respectively. The fourth block surface 32d and the eighth block surface 33d may be connected against an internal hole of the shaft sleeve 22 of the internal gear assembly 2. The first surface 31a may be connected against the first block surface 32a.

As shown in FIG. 2, in some embodiments, the driving ring 31 may be provided with a first snap-fit feature 311, and one side of the driving wheel 5 may be provided with a second snap-fit feature 51, a first boss 52 of the driving wheel 5, and a second boss 53 of the driving wheel 5. The first snap-fit feature 311 and the second snap-fit feature 51 may be snap-fitted with each other.

As shown in FIGs. 1 to 3, in some embodiments, the axial limiting member 6 may be snap-fitted with the driving wheel 5 in an axial direction, and the cover plate 4 may be disposed on the internal gear assembly 2.

The cover plate 4 may be fixedly coupled to the internal gear assembly 2, and it plays the main role of pressing the external gear plate 1 into a groove of the internal gear assembly 2 to prevent the external gear plate 1 from coming out in the axial direction. The axial limiting member 6 may be snap-fitted with the driving wheel 5 in the axial direction to prevent various parts from coming out in the axial direction.

As shown in FIG. 1, in some embodiments, the spring 34 may be a linear spring.

The spring 34 may be a linear spring or a leaf spring, which is a compression spring with a small volume.

As shown in FIG. 1, in some embodiments, the axial limiting member 6 may be a circlip.

The axial limiting member 6 may be a nut, a circlip, or other parts.

The operation principle is as follows: the driving wheel 5 of the hinge assembly is rotated clockwise, drives the driving ring 31 to rotate clockwise, drives the first surface 31a to contact with the first block surface 32a, and drives the first wedge block 32 to rotate clockwise. At this time, a gap is formed between the fourth block surface 32d of the first wedge block 32 and a surface of the internal hole of the shaft sleeve 22. After the internal and external gear plates are engaged, the eccentricity e is no longer stable, and the internal and external gear plates are not wedged tightly. As the second block surface 32b continues to compress the spring 34, the spring 34 pushes the second wedge block 33 to rotate clockwise, and the gap elimination unit 3 rotates clockwise as a whole, thus realizing the change in the angle between the internal and external gear plates, that is, completing the angle adjustment function of the hinge mechanism.

When rotates to a required position, the driving wheel 5 stops rotating, then the driving ring 31 stops, and the first wedge block 32 and the second wedge block 33 are wedged tightly to both sides respectively under the action of the spring force of the spring 34. After the internal and external gear plates are engaged, the eccentricity e tends to be stable, and the internal and external gear plates are engaged tightly, thereby realizing the gapless lock of the hinge mechanism.

On the contrary, the adjustment function in a reverse direction can be realized by driving the second wedge block 33.

Various technical features of the above embodiments may be combined arbitrarily. To simplify the description, not all possible combinations of various technical features in the above-described embodiments are described. However, as long as there is no conflict in the combinations of these technical features, all should be considered to be within the scope of the present disclosure.

The above-described embodiments only express several implementations of the present disclosure, and their descriptions are relatively specific and detailed, but should not be construed as limiting the scope of the present disclosure. It should be noted that, for those skilled in the art, various modifications and improvements can be made without departing from the concept of the present disclosure, and these all fall within the protection scope of the present disclosure. Therefore, the protection scope of the present disclosure should be determined according to the appended claims.

## Claims

1. A gapless hinge mechanism, comprising an external gear plate (1), an internal gear assembly (2), a gap elimination unit (3), a cover plate (4), a driving wheel (5), and an axial limiting member (6), wherein:
the external gear plate (1) is crimpedly connected to the internal gear assembly (2),
a first internal opening (13) is disposed at a center of the external gear plate (1), and a center boss (12) is disposed at an opening of the first internal hole (13),
a space A is defined by the center boss (12) and a central internal hole of the internal gear assembly (2), and
the gap elimination unit (3) is disposed in the space A.

2. The gapless hinge mechanism according to claim 1, wherein
an external gear belt (11) is disposed at an outer side of the external gear plate (1),
the internal gear assembly (2) comprises an internal gear plate (21) and a shaft sleeve (22),
the shaft sleeve (22) is disposed in a central internal hole of the internal gear plate (21), and
the internal gear plate (21) is engaged with the external gear belt (11).

3. The gapless hinge mechanism according to claim 2, wherein:
the gap elimination unit (3) comprises a driving ring (31), a first wedge block (31), a second wedge block (33), and a spring (34),
a second internal hole (312) is disposed in the driving ring (31),
the gap elimination unit (3) is rotationally sleeved on the center boss (12) through the second internal hole (312),
the first wedge block (32) and the second wedge block (33) are disposed at an outer side of the driving ring (31),
both ends of the spring (34) act on the first wedge block (32) and the second wedge block (33),
the driving ring (31) is provided with a first surface (31a), a second surface (31b), and a third surface (31c),
the first wedge block (32) is provided with a first block surface (32a), a second block surface (32b), a third block surface (32c), and a fourth block surface (32d),
the second wedge block (33) is provided with a fifth block surface (33a), a sixth block surface (33b), a seventh block surface (33c), and an eighth block surface (33d),
the third surface (31c) is connected against the third block surface (32c) and the seventh block surface (33c), respectively,
the fourth block surface (32d) and the eighth block surface (33d) are connected against an internal hole of the shaft sleeve (22) of the internal gear assembly (2),
the first surface (31a) is connected against the first block surface (32a),
the driving ring (31) is provided with a first snap-fit feature (311), and one side of the driving wheel (5) is provided with a second snap-fit feature (51), a first boss (52), and a second boss (53), and
the first snap-fit feature (311) and the second snap-fit feature (51) are snap-fitted with each other.

4. The gapless hinge mechanism according to claim 3, wherein
the axial limiting member (6) is snap-fitted with the driving wheel (5) in an axial direction, and
the cover plate (4) is disposed on the internal gear assembly (2).

5. The gapless hinge mechanism according to claim 3, wherein the spring (34) is a cylindrical spring.

6. The gapless hinge mechanism according to claim 5, wherein the axial limiting member (6) is a circlip.
